# EUROPEAN PATENT APPLICATION

(11) **EP 2 325 222 A1**
(43) Date of publication of application: **25.05.2011**
(21) Application number: 10190435.7
(22) Date of filing: 09.11.2010
(51) Int. Cl.: C08G 59/22, C08L 63/00

(54) **Fiber-reinforced polymers, epoxy-based polymeric compositions and use thereof**

(30) Priority: 12.11.2009 IT MI20091980
(71) Applicant: IMAST S.c.a.r.l., 80121 Napoli (IT)
(72) Inventor: Barra, Giuseppina, 80121, Naples (IT); Lavorgna, Marino, 80121, Naples (IT); Mensitieri, Giuseppe, 80121, Naples (IT); Piscitelli, Filomena, 80121, Naples (IT)
(74) Representative: Postiglione, Ferruccio

(57) **Abstract**

A composition is described comprising an epoxy resin comprising at least a difunctional epoxy resin and at least a crosslinker for epoxy resin. The difuncional epoxy resin has a viscosity of from 1000 to 5000 mPa.s.
For example, the composition comprises a low viscosity diluent for modulating the composition viscosity in an amount not higher than 10% by weight.

## Description

### Technical field of the invention

The present invention refers to fiber reinforced materials with polymer matrix, known also as FRP materials (fiber reinforced polymers) or fiber reinforced polymers, particularly of the epoxy-based polymer matrix type, said matrix being crosslinked at low temperature. Particularly but not limitatively, the present invention relates to FRP materials for use in civil applications, such as for example: structural reinforcement, restoration and/or structural repairing of damaged buildings.

### Prior art

FRP materials based on epoxy resins are known. Epoxy resins are often employed in civil buildings, mines or for site restoration and they are the polymer matrix of the so called FRP.

For said applications the epoxy matrixes are usually crosslinked at low temperature (environmental temperature). Commercial and available for applications in FRP at environmental temperature epoxy systems are specifically formulated to reach in a very short time at environmental temperature (25-30°C) the most elevated conversion rate.

As known, crosslinking is defined as the process controlled in time by the temperature at which an epoxy/crosslinking mixture is transformed in a solid material.

A complete crosslinking, defined as the condition in which all epoxy groups have been reacted, is generally unattainable. To approach a complete crosslinking the polymer matrix has necessarily to be crosslinked at a temperature higher than its glass transition temperature. The glass transition temperature of a completely cured system is generally named "end glass transition temperature".

Relationship between end glass transition temperature T_{gu} and the material real temperature T_{g} (T_{gu/}T_{g}) is a convenient and useful way to estimate the crosslinking rate of an epoxy resin-crosslinking system.

It is a common belief that systems characterized by a crosslinking rate not near to the unit show poor mechanical properties and poor dimensional stability. In fact on regard that said systems are weak, brittle and not utilizable for main applications. The search for new formulations is hence directed essentially to materials characterized by high crosslinking rate.

Crosslinking rate can be optimized (that is its value must be near to the unit) if T_{gu/}T_{g} value is near as possible to the unit. Practically, materials are formulated in such a way that the end glass transition temperature is near to the application temperature.

In particular, for applications in which resins cannot be crosslinked at high temperature, crosslinking rate is maximized thus causing reduction of end glass transition temperature on values near the temperature of end application, utilizing the plasticizing effect of reactive solvents.

For reaching a conversion unitary value employing crosslinking process at low temperature, according to widerspread technique it is common to add an high percentage of a reactive solvent to the formulation.

Reactive solvents or catalysts, such as polyols, once added to the formulation, are able to reduce T_{gu} so as to make it comparable to the effective T_{g} and hence to modulate the conversion rate. They affect both T_{g} and T_{gu}. Reactive solvents take part in crosslinking reaction, consequently the crosslinked material properties, such as glass transition temperature T_{g}, are influenced by their molecular structure; moreover, they share in an increase of crosslinked resin flexibility and then in a reduction of end glass transition temperature T_{gu}.

Applicant has found that the presence of the reactive solvent allows the applied material to be characterized by an end glass transition temperature that is only 30-35°C higher than the temperature at which it was applied (environmental temperature). It has been noted that when said materials are exposed to high temperature conditions, they collapse to a gummy state giving rise to a loss of mechanical properties.

Applicant has also observed that due to the high exposition temperature in summer season in some Mediterranean areas, FRP effective temperature exceeds end glass transition temperature T_{gu} of their polymer matrix, so that it loses the mechanical properties and effectiveness thereof.

Afterwards, documents are cited relating to materials containing epoxy resins crosslinked at quite low temperatures.

Document WO-A-1989/004335 discloses compositions comprising a mixture of (A) an epoxy resin composition consisting essentially of (1) al least an epoxy resin having on average not more than 2 epoxy groups per molecule, (2) at least an epoxy resin having on average more than 2 epoxy group per molecule and (3) al least a gummy or elastomer, and (B) eventually a low viscosity reactive solvent.

Patent US-A-4.221.890 discloses an epoxy resin composition useful for repairing concrete surfaces. Said composition comprises an epoxy resin crosslinked with polyamines and phenol accelerators. In an embodiment, epoxy resin is conditioned with a modifier comprising glycidilethers, phenol accelerators and phosphites before being combined with crosslinker.

Patent US-A-3.989.673 describes an epoxy resins and crosslinkers system, that can be crosslinked at low temperatures.

Patent US-A-6.987.161 describes crosslinking agents for epoxy resins that should be used at temperatures lower than crosslinkers actually available.

Patent US-A-4.772.645 discloses one component heat-stable epoxy resins compositions, comprising an epoxy resin, an amount of cyclic-aliphatic or not aromatic polyol with 2 to 18 carbon atoms, wherein at least two hydroxy groups of said polyol are primary or secondary groups and said polyol is devoid of strong acid groups and devoid of electrondrawing substituents.

Patent US-A-5.216.093 discloses an epoxy resin composition crosslinkable at low temperature comprising: a main agent based on epoxy resin to which a carboxylic acid ester of a polyhydroxy alcohol is added and that contains an epoxy resin having urethan bonds in its molecules, and a crosslinker consisting of an alicyclic amine compound.

### Summary of the invention

Applicant has realized that referring to the epoxy matrices used for realizing FRP and actually on the market, the existing gap between environmental temperature and temperature at which FRP material is exposed is a factor limitating their use.

In particular it has been noted that materials on the market based on fiber reinforced polymers, FRP, realized for reaching maximal crosslinking rate at environmental temperature and intended for a civil use, lose their mechanical properties at a temperature of a few grades higher than their operative temperature.

Applicant has in particular faced the problem of finding formulations based on epoxy resins with satisfactory mechanical and physic properties so as to permit the installation of corresponding FRP at environmental temperature, thus obtaining a product that can be sure also in Mediterranean area.

Applicant has surprisingly found that employing in FRP materials an epoxy base matrix having a little amount of said material not crosslinked during the installation phase, not only mechanical performances of FRP material are not negatively influenced but advantageous results are attained as far as mechanical properties are concerned.

Object of the present invention is a composition according to claim 1. Preferred embodiments of the composition are defined in the appended claims from 2 to 11.

Another object of the present invention is a fiber reinforced polymer as defined in claim 12 and its particular embodiment defined in claim 13.

Object of the invention is also the use of said fiber reinforced polymer as described in claim 14 and in a preferred embodiment in claim 15.

### Brief description of the drawings

Further characteristics and advantages of the invention will be evident from the following description of an embodiment and variants thereof given as exemplificative. Referring to the alleged drawings:
fig. 1 shows curves of the heat release rate of a sample realized according to known technique and of samples realized according to invention examples; curves of fig. 1 have been obtained with tests carried out with a cone calorimeter;
Fig 2. shows curves of CO release of a sample realized according to known technique and of samples realized according to invention examples; curves of fig. 2 have been obtained with tests carried out with a cone calorimeter;
Fig 3. shows curves of CO₂ release of a sample realized according to known technique and of samples realized according to invention examples; curves of fig. 3 have been obtained with tests carried out with a cone calorimeter;
Fig 4. shows curves of water adsorption of a commercial sample and of a sample realized according to an example of the invention.

### Detailed description of the invention

### Definitions

Here below a few definitions are provided, useful for the comprehension of the above description.

Composite or composition = material comprising two or more distinct parts operating together. Often one of the parts is harder and stronger and it constitutes reinforcement, whereas the other one is a material transferring strains and is usually indicated as matrix.

Multifunctional epoxy resin = epoxy resin presenting more than two epoxy groups.

Glass transition temperature = temperature at which transition in amorphous domains between glass and gummy state does occur.
Practice temperature = temperature at which the material was exposed during is normal life cycle.

Epoxy resins-novolac = resins obtained by reacting epichlorohydrin with condensation products of phenol and formaldeyde. Epoxy resins from novolac are linear phenol thermoplastic, partially crosslinked resins.

### Particular embodiments of the invention

According to an embodiment of the invention a fiber reinforced material is described with polymer matrix, or shortly FRP (fiber reinforced polymer) or "fiber reinforced polymer" comprising a composite material including a polymer matrix and reinforcing fibers. For example as reinforcing fibers carbon fibers can be employed (particularly suitable for civil engineering applications) thus obtaining CFRP polymer. Instead of carbon fibers, also glass fiber or kevlar® can be for example employed, that can show high resistance. Hereafter for brevity the fiber reinforced polymer will be named FRP polymer.

Referring to the civil engineering application, said fiber reinforced polymer has the shape of a thin rolled section that can be connected to structural elements. Fiber reinforced polymer FRP increases significantly the ability to bring load of the elements.

Polymer matrix has the role to protect fibers and maintain their alignment, thus allowing an uniform distribution of loads among the fibers as such. Polymer matrix is an epoxy-based matrix and has a composition comprising: an epoxy resin comprising in its turn at least a difunctional epoxy resin and at least a crosslinker (or hardener).

According to the illustrative application type shown above, the polymer matrix on epoxy base has a low crosslinking temperature. In particular, the polymer matrix on epoxy base has a crosslinking temperature of from 5°C to 60°C, preferably of from 10°C to 50°C and more preferably from 15°C to 35°C.

Moreover, referring again to the illustrative application shown above of FRP polymers, the polymer matrix being part of the fiber reinforced polymer is not completely crosslinked at the installation temperature of FRP polymer. For example, the crosslinking rate α% of polymer matrix on epoxy base is of from 80% and 90%, preferably of from 84% and 93%, more preferably of from 87% and 92%.

The difunctional epoxy resin of polymer matrix shows a viscosity comprised between 1000 e 15000 mPa·s, preferably of 3000-12000 mPa·s, more preferably of 5000-9000 mPa·s. Said viscosity values allow the polymer matrix to enter as desired into the reinforcing fibers employed for the FRP polymer achievement. The viscosity can be measured with the aid of a Brookfield viscosimeter.

Advantageously it is possible not to add any diluent or solvent in the polymer matrix. Notwithstanding, it is optionally possible to use a reactive solvent of low viscosity for modulating viscosity of the polymer matrix used for impregnating the fibers. For example, a possible diluent comprises a mono- or diglycidilether as reactive solvent, having exemplifycally an equivalent weight (EEW) between 100 and 170 g/eq and eventually a non-reactive solvent with low evaporation temperature, preferably methanol or ethanol. If desired, the solvent has a % by weight, referred to the entire polymer matrix composition, not higher than 10%. Consequently, both polymer matrix and FRP polymer can contain or not, only in a limited amount, additives having the same action of solvents.

As to the difunctional epoxy resin, preferably it is bisphenol-A diglycidilether, DGEBA and/or bisphenol-F diglycidilether, DGEBF.

According to a preferred example, epoxy resin comprises also at least a multifunctional epoxy resin. For example, the multifunctional epoxy resin is selected from the group consisting of tetraglycidil-4,4'-diaminodiphenylmethane(TGDDM), triglycidil-p-aminophenol (TGAP), epoxy-novolac resin.

As to crosslinking agent, it can be an aromatic or aliphatic amine. Preferably meta-xylylendiamine having an equivalent weight (EEW) of 35 g/mole eq is used.

It should be noted that polymer matrices and relative fiber reinforced polymers described above are characterized by a glass transition temperature the value thereof being about 20-40°C higher than the temperature at which they are applied (environmental temperature 15-30°C).

For these polymer matrices and relative fiber reinforced polymers the end glass transition temperature is of about 85-90°C (T_{gu}). Consequently, when said materials are submitted to an increase of their operative temperature they will further crosslink (that is they undergo a further crosslinkling process), so that as a result there will be an increase of the epoxy groups conversion with subsequent increase of their T_{g}. In particular, the glass transition temperature will increase thus approaching the end glass transition temperature value.

It has been realized that the material resulting from said conversion increase will maintain its mechanical and structural properties also at a temperature much higher than the mean environmental temperature of Mediterranean area. At a temperature range until exposition temperature (that for civil applications can reach also value comprised between 85 and 90°C), these materials maintain their mechanical and structural properties. For example, the mechanical and structural properties of fiber reinforced polymer are maintained also at a temperature of the environment in which it is applied higher than 40°C. Said temperature conditions are verified for example for civil applications on infrastructures /construction in Mediterranean area.

Applicant has experimentally realized that for these materials type described above, a little amount of not crosslinked material not only does not influences negatively the mechanical performances but can also be advantageous and desiderable. On the contrary, FRP polymers of prior art and available on the market, designed for obtaining the maximal crosslinking rate at environmental temperature, lose their mechanical properties at temperature only few grades higher than that of their application.

Later on further emobodiments of the invention will be described.

As to the epoxy resin, it can comprise for example at least a first diglycidilether compound having no more than 2 epoxy groups per molecule, and for example characterized by an equivalent weight between 150 and 250 g/eq and eventually a second polyglycidilether compound having more than 2 epoxy groups per molecule, characterized for example by an equivalent weight (EEW) between 150 and 300 g/eq.

As to the crosslinking agent, it can preferably comprise an accelerator, as for example an accelerator selected from the group consisting of aliphatic or aromatic alcohol, aliphatic polyalcohol, preferably nonylphenol or hydrocarbon resin.

Polymer matrix can also comprise a filler that, for example, can be selected from the group comprising systems based on silica nanoparticles dispersed in epoxy resins or systems wherein nanoparticles are directly produced in situ with sol-gel method.

Referring to the systems based on nanoparticles, the filler can be a silica nanoparticles dispersion in for example a diglycidilether compound of epoxy resin having no more than 2 epoxy groups per molecule, wherein the silica content is 40% by weight, the EEW (equivalent weight) is 300 g/mol eq. Tipically, the silica nanoparticles have diameters with a mean value of 20 nm.

As to the systems in which the silica nanoparticles are directly produced in situ with sol-gel method, the filler can be a system in which the silica particles are produced during mixing a dispersion of organo-silica precursors in epoxy resin and crosslinking agent.

In particular, organo-silica precursors are organosilanes selected from the group comprising tetraethoxysilane, glycidiloxypropyltrimethoxysilane, aminopropyltriethoxysilane.

### Examples of stoichiometric relationship

Here below a few exemplificative stoichiometric relations are presented, with reference to the mixture containing the above described components, that is: epoxy resin (component A), filler (component B), diluent (component C), crosslinking agent (component D), accelerator for crosslinker (component E).

Epoxy resin is in the range 60-90% by weight, and it consists of a mixture of difunctional epoxy resin (DGEBA and/or DGEBF) and polyfunctional epoxy resin. The amount of said polyfunctional epoxy resin in component A is of from 0 to 15%.

Filler is ranging between 0 and 40% of the whole mixture, both when systems based on nanoparticles are used and when systems in which silica nanoparticles are directly produced in situ with sol-gel method are used. The inorganic amount as SiO₂ content is ranging from 0 to 20% by weight.

As mentioned above, the low viscosity diluent, when provided, is added in an amount of from 0 to 7%, preferably less than 5%.

The crosslinking agent is present in an amount as defined by the relationship [amine groups equivalents]/[epoxy groups equivalents] between 0,95/1 and 1/1.

Accelerator is employed in an amount ranging from 0 and 5% by weight.

### Example 1: polymer matrix and fiber reinforced polymer

According to said example 1, polymer matrix was realized with the following formulation Fp.

### Fp formulation

Fp formulation comprises: a component 1 and a component 2 in a mixture relation 85:15.

Component 1 is an homogenous and degased mixture having the following composition:

| Components | % (p/p) |
|---|---|
| A: DGEBA | 77 |
| A: DGEBF | 19 |
| E: accelerator (particularly nonylphenol) | 4 |

Component 2 is the crosslinking agent constituted by meta-xylylendiamine (MXDA).
The mixture of component 1 and component 2 thus obtained has a viscosity (Brookfield method) of 5000 mPa·s

### Preparation of fiber reinforced polymer, FRP

Carbon fiber reinforced polymer (FRP) comprises the polymer matrix obtained with Fp formulation.

For preparing the fiber reinforced polymer, component 1 and component 2 are mixed at environmental temperature in the weight ratio 85:15, avoiding air bubbles formation. The mixture is then applied for 1 h at environmental temperature on an uniaxial 600 mesh carbon fiber fabric and is allowed to crosslink for 12 h at environmental temperature.

### Comparison between FRP polymer according to example 1 and a FRP polymer of prior art

Mechanical properties of reinforced polymer specimens FRP obtained impregnating a carbon fiber fabric with a commercial matrix formulation and with a matrix obtained with formulation described in example 1 have been compared.

Afterwards commercial formulation is designed as Fc.

Said properties have been evaluated at environmental temperature and after exposition at 65% relative humidity (RH) at 70°C.

Tensile stress tests have been carried out according to ASTM D3039/3039M rule, and E modulus (Gpa), tensile stress εᵤ (adim.) and breaking stress σᵤ (Gpa) mean values obtained with 20 repetition are reported in the following table 1.

| **Table 1** | | | | | | | | | |
|---|---|---|---|---|---|---|---|---|---|
| | T = 25°C | | | T = 70°C RH = 65% | | | difference % | | |
| matrix formulation | E (Gpa) | εᵤ | σᵤ | E (Gpa) | εᵤ | σᵤ | ΔE | Δεᵤ | Δσᵤ |
| Fc | 221 | 1.27 | 2806 | 222 | 0.94 | 2056 | 0 | -26 | -27 |
| Fp | 215 | 1.39 | 2971 | 236 | 1.37 | 3211 | 10 | -1 | 8 |

It should be observed that for FRP materials E modulus probably depends strongly on fiber type utilized for reinforcement and on reinforcement/matrix ratio. On the contrary, ultimate strain εᵤ and breaking stress σᵤ are correlated to the polymer matrix capability to give out loads on the fibers. In particular, at 70°C the latter properties drastically worsen for samples obtained from the commercial matrix (Fc).

On the contrary, samples obtained from example 1 formulation (Fp) maintain their properties and thus they are particularly suited for duty temperatures up to 70°C.

### Further formulation examples: pure formulation and nanocomposite formulation

Following table 2 shows the ratio among the different components for two different formulations according to two particular invention embodiments: a pure formulation Fp (that is without filler) and a nanocomposite formulation Fps, that is containing silica nanofillers.

| **Table 2** | | | | | |
|---|---|---|---|---|---|
| components/formulation | epoxy resin: A (% by weight) | | filler B (% by weight) | crosslinker D (% by weight) | accel. E (% by weight) |
| | DGEBA | DGEBF | silica/epoxy (40/60%) | metaxylylendiamine | nonylphenol |
| pure = Fp | 65.06 | 16.24 | 0 | 15.3 | 3.4 |
| nanocomposite= Fps | 57.95 | 15.75 | 8.3 | 14.7 | 3.3 |

1) PURE FORMULATION (Fp)
A = DGEBA + DGEBF
E = nonylphenol
D = meta-xylylendiamine (MXDA)

Components A and E are mixed together at environmental temperature avoiding air bubbles, then component D is added. Resulting reactive mixture is quickly stirred and applied within 1 h from its preparation at environmental temperature to give three different sample types as described afterwards.

### 2) NANOCOMPOSITE FORMULATION (Fps)

Components A, B and E are mixed together at environmental temperature avoiding air bubbles and silica crystals. Then component D is added. Resulting reactive mixture, having at 0 time a viscosity of 6000 Mpa·s (Brookfield), is quickly stirred and applied within 1 h from its preparation at environmental temperature to give three different sample types as described afterwards.

From both the formulations described above three sample types are obtained: thin film, sample of "dog bone" type and FRP test pieces.
1) Thin film (thickness = 0,5 mm) was prepared spreading the mixture on a PET sheet with the aid of an Elcometer Docor Blade set on a 0.8 mm thickness.
2) The "dog bone" type samples were obtained pouring the reactive epoxy mixture in a teflon mould having the dog bone shape.
3) Fiber reinforced polymer samples (FRP) are prepared pouring the reactive mixture on a commercial fabric of unidirectional continue carbon fibers. A 1000 g amount epoxy mixture per m² fabric used as reinforcement is employed.

All samples are allowed to end their own crosslinkg process at environmental temperature 25 ± 2°C in 7 days before being employed. Performance of these materials has been valuated using three different techniques:
- dynamic mechanical analysis (DMA)
- differential scanning calorimetry (DSC)
- thermomechanical analysis (TMA)
- water adsorption isotherms determination.

Effect of environmental agents on materials properties change has been also studied. This analysis is necessary for operative structures computation in a long time and for temperature and humidity different conditions.

Effect of simulated aging, named accelerated climatic test (ACT), has been evaluated on samples exposed 7 months at cycles in which temperature varies from -5 to 40°C and relative humidity from 0 to 80%. Dynamic-mechanical materials properties have been monitored during a 7 months hygrothermic cycle.

### Dynamic mechanical analysis DMA

Dynamic-mechanical properties have been determined employing a thermal mechanical analyzer TA Instrument Q 800. Dynamic-mechanical spectra have been registered in tensile procedure at 1 Hz frequency and 5 µm amplitude and at heating rate of 3 ± °C/min in the range -50 250°C. Experiments have been carried out on 7 months crosslinked samples, on up to 7 months aged samples.

### Differential scanning calorimetry DSC

DSC analysis have been carried out employing a TA instrument Q 1000. Instrument has been gauged for temperature and enthalpy with indium (Tm = 156.6°C and H = 28.45 J.g-1) and cyclohexane (Tm = 6,7°C). Tests have been carried out in a nitrogen inert atmosphere. Samples, about 5 mg each, are sealed hermetically in aluminium capsules and submitted to 2 consecutive scannings at 10°C/min in a range -40°C to 250°C for eliminating eventual relaxation and improve the glass transition temperature determination. Residual heat for crosslinking is assumed as the enthalpy produced by exotherm area observable during the first scanning. Glass transition temperature is assumed as flex temperature in the glass transition range. The instrument TA analysis software has been used.

### Cone calorimeter

Burning experiments have been carried out in a oxygen consumption calorimeter (cone calorimeter) at a 50 kW/m² incident heat flux. The heat release rate, CO and CO₂ yield, have been measured and reported as mean curves of three repeated experiments.

### Thermomechanical analysis TMA

Thermal expansion coefficient has been determined. Length change, as ratio between length variation and initial length (DL/Lo), has been measured with the temperature change increasing with a rate of 3°C/min from 50 to 155°C.

### Mechanical strain test

Mechanical properties at strain have been determined according to ASTM D638-03 rule. The samples having a dog bone shape were tested with the aid of Instrom 4505 (UK) using a 1 KN load cell. Tests have been carried out at environmental temperature at 1 mm/min tensile rate, applying a preload of 20N. Properties comprising end resistance, stress and breaking strain and E modulus in linear region have been determined.

### Water adsorption isotherms

Steam adsorption isotherms have been determined at 25°c and 45°C with the use of a Q5000 SA analyzer from TA Instruments. The water amount adsorbed was determined as weight increase of a sample maintained at constant temperature. Relative humidity is varied from 0.3 to 0.9 with 0.1 relative rises. Change between a step and a subsequent one was permitted only when the balance condition was reached (considering a weight change is lower than 0.003%).

The following table 3 shows thermal and mechanical properties of a few obtained samples. Also a sample formulated according to Fp formulation, but post-cured 1 h at 60°C, is enclosed. Referring to table 3 samples it should be noted that:
- Fc sample is realized according to the commercial formulation and has high conversion rate, that is curing (98%)
- Fp sample is obtained from Fp formulation with a curing temperature of 60°C,
- Fp1 sample is obtained with Fp formulation with a curing temperature like environmental temperature and with diluent,
- Fps sample is obtained from Fp formulation with a silica filler amount of 5% by weight,
- Fp10 sample is obtained from Fp formulation with silica filler amount of 5% by weight and 10% by weight solvent.

| **Table 3** | | | | | |
|---|---|---|---|---|---|
| **components and properties** | **Fc** | **Fp** | **Fp1** | **Fps** | **Fp10s** |
| A: epoxy resin | X | X | X | X | X |
| B: filler | - | - | - | X | X |
| C: diluent | X | - | X | - | X |
| D: crosslinker | X | X | X | X | X |
| E: ind. accelerator | X | X | X | X | - |
| cur. temp. at environmental temperature | 1 week | 1 week | 1 week | 1 week | 1 week |
| α conversion rate % | 98 | 90-92 | 88-91 | 88-91 | 88-91 |
| T_{gu} (°C) DSC analysis | 50 | 87 | 85 | 99 | 102 |
| T_{g} (DMA analysis) as maximum value of dissipation factor after curing cycle (°C) | 60±3 | 81±4 | 85±3 | 76±4 | 72±3 |
| E' at 150°C (Mpa)** | 8±5 | 23 | 23 | 19±1 | 22 |
| T_{g} after climatic aging cycles* (DMA analysis) as maximum value of dissipation factor | 78 | 100 | | 99 | |
| modulus elasticity E (Mpa) *** | 2301±99 | 2216±44 | 2255±368 | 2241±155 | 2014±70 |
| maximum | 68±2 | 84±2 | 50±8 | 47±5 | 52±8 |
| stress σₘₐₓ (MPa) | | | | | |
| breaking stress σ_{b} (MPa) | 42±3 | 71.8±0.6 | 50±8 | 47±5 | 52±8 |
| breaking strain ε_{b} (%) | 5.5±0.7 | 6.3±0.4 | 2.8±0.4 | 3.5±0.4 | 3.4±0.4 |
| * after 210 aging cycles | | | | | |
| ** calculated from DMA analysis | | | | | |
| *** calculated as tensile test (ASTM D 638) | | | | | |

Referring to the three sample forms mentioned above (thin film, dog bone, reinforced polymer FRP), depending on the realized test shown in table 3, a sample in the form established by standard regulating test execution conditions has been used. As to DMA analysis, for the different formulations samples have been employed having a rectangular thin film shape. The tensile analysis on the different polymer matrices has been carried out on samples with dog bone shape, whereas strain analysis was executed on samples not with dog bone shape having suitable size.

As clear from table 3, modulus of elasticity values E are not very different for all the samples. As to the maximum stress σ_{maX} (MPa), breaking stress σ_{b} (MPa) and breaking strain ε_{b} (%) , the obtained values are much higher for sample Fp. Fp1, Fps and Fp10s samples have breaking stress values higher than those of commercial sample Fc.

### Fire resistance property

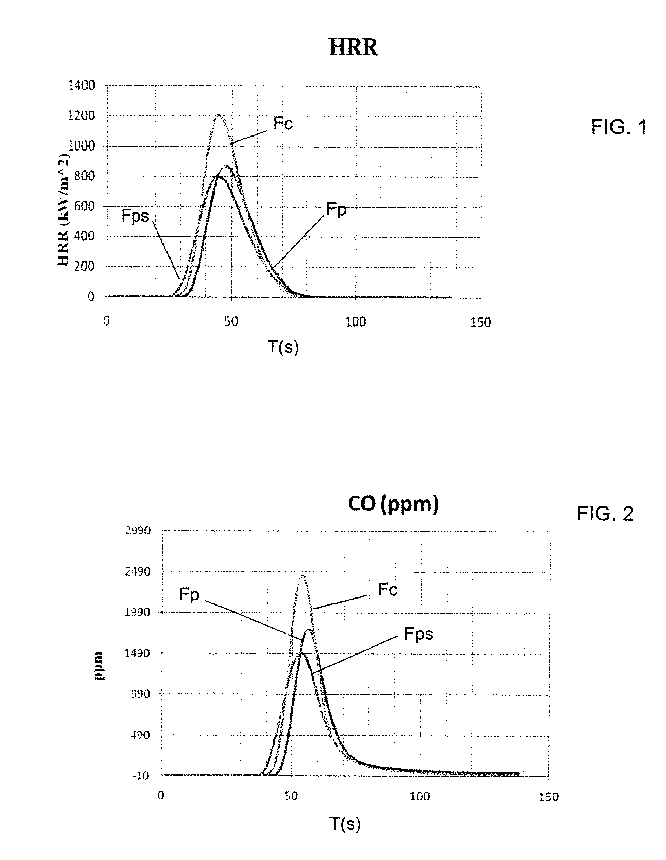

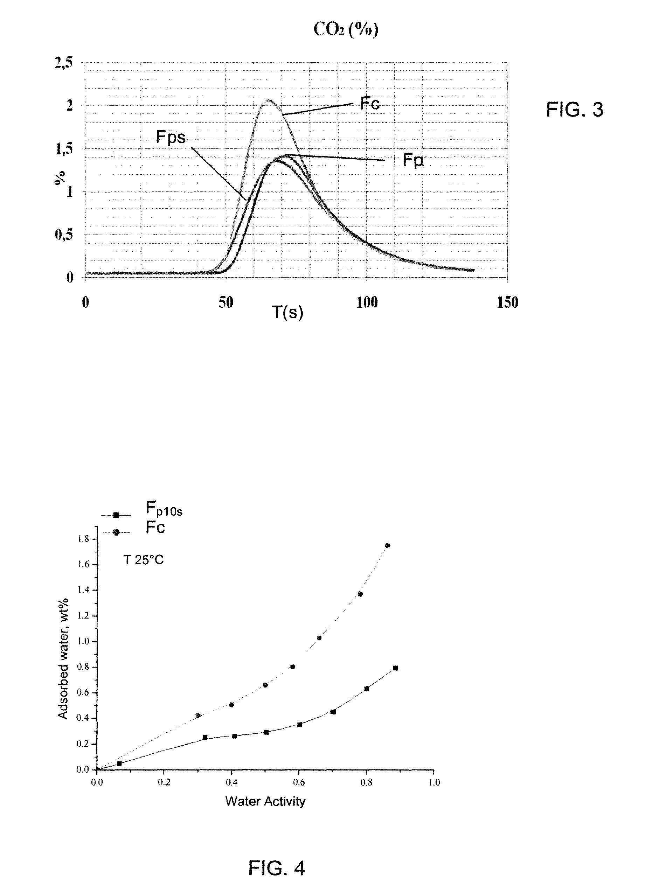

As clear from figures 1, 2 and 3, commercial sample Fc shows a superior heat release rate (HHR) (fig. 1) and it releases a higher CO (fig. 2) and CO₂ (fig. 3) content in comparison to Fp and Fps samples according to the examples of the invention.

### Water adsorption

Both the curves of figure 4 indicate the adsorbed water according to the water activity. As shown in figure 4, the water adsorbed curve of commercial sample Fc (curve with spots) is higher than the observed for Fp10s samples (curve with squares).

### TMA analysis

For TMA analysis reference is made to the following table 4.

| **Table 4** | | |
|---|---|---|
| Sample | temperature range (°C) | α (°C⁻¹) (*10⁻⁴) coefficient |
| Fc commercial system | 55 ÷ 151 | 2.01 |
| Fc1 (further commercial system) | 55 ÷ 150 | 1.95 |
| Fps | 55 ÷ 90 | 0.73 |
| | 90 ÷ 150 | 1.7 |
| Fp10s | 55 ÷ 90 | 0.79 |
| | 90 ÷ 150 | 1.73 |
| Fp | 55 ÷ 90 | 0.85 |
| | 90 ÷ 150 | 1.82 |

### Application examples

The fiber reinforced polymers, FRP, according to the embodiments of the invention, in addition to the mechanical properties mentioned above have also further significant characteristics for repairing e structural reinforcement applications, such as: light weight, not corrosive properties, quick and easy installation, low cost and satisfactory design.

The FRP polymer frames can be made adhering to beams and plates or slabs for increasing their share and bending ability, and can be wrapped around columns for increasing their ability to carry load and ductility in case of quakes.

The fiber reinforced polymer according to the embodiments of the invention, FRP, can be used, in addition to the construction sector, for many other industrial applications at environmental temperature, such as for example: aerospace and motor industries and sporting plants.

## Claims

1. A composition comprising:
- an epoxy resin comprising at least a difunctional epoxy resin,
- at least a crosslinker for epoxy resin, wherein the difuncional epoxy resin has a viscosity of from 1000 to 5000 mPa·s at environmental temperature,
**characterised in that** said epoxy resin has a low crosslinking temperature, in particular comprised between 5°C to 60°C, preferably, between 10°C - 50°C and more preferably between 15°C - 35°C.

2. Composition according to claim 1, comprising a low viscosity diluent for modulating the composition viscosity, in an amount non higher than 10% by weight, wherein the diluent preferably comprises a mono- or diglycidil ether as reactive solvent.

3. Composition according to at least one of the preceding claims wherein said epoxy resin has a crosslinking rate comprised between 80% - 96%.

4. Composition according to at least one of the preceding claims, further comprising an accelerator for the crosslinking agent and a filler.

5. Composition according to claim 4, wherein the filler is selected from the group consisting of systems based on silica nanoparticles dispersed in epoxy resins or systems wherein the silica nanoparticles are obtained directly in situ with the sol-gel method.

6. Composition according to claim 4, wherein the filler is a silica nanoparticles dispersion in a diglycidil ether compound having no more than 2 epoxy groups per molecule.

7. Composition according to claim 4, wherein the filler is a system in which silica nanoparticles are directly produced in situ with sol-gel method, preferably the silica nanoparticels are produced while mixing an organo-silica precursor dispersion in epoxy resin and in the crosslinking agent.

8. Composition according to claim 7, wherein the organo-silica precursors are organosilanes selected from the group consisting of tetraethoxysilane, glycidiloxypropyltrimethoxysilane, aminopropyltriethoxysilane.

9. Composition according to claim 4, wherein the accelerator is selected from the group consisting of aliphatic or aromatic alcohol, aliphatic polyalcohol, preferably nonylphenol or hydrocarbon resin.

10. Composition according to claim 1, wherein epoxy resin further comprises at least a multifunctional epoxy resin.

11. Composition according to claim 10, wherein the multifunctional epoxy resin is selected from the group consisting of tetraglycidil-4,4'-diaminodiphenylmethane (TGDDM), triglycidil-p-aminophenol (TGAP), epoxy-novolac resin.

12. Reinforced polymer comprising:
- a polymer matrix;
- reinforcing fibers incorporated in said polymer matrix,
**characterized in that** said polymer matrix is a composition according to at least one of the preceding claims.

13. Reinforced polymer according to the preceding claim, wherein said polymer matrix is applied onto said reinforcing fibres at environmental temperature.

14. Use of a reinforced polymer according to at least one of the preceding claims in civil applications on infrastructures/costruction for structural reinforcement and/or for structural repairing.

15. Use of a reinforced polymer according to at least one of the preceding claims in civil applications in areas in which civil structures are exposed at a temperature higher than 40°C.
